# EUROPÄISCHE PATENTSCHRIFT

(11) **EP 1 878 650 B1**
(45) Veröffentlichungstag und Bekanntmachung des Hinweises auf die Patenterteilung: **03.12.2008**
(21) Anmeldenummer: 07009822.3
(22) Anmeldetag: 16.05.2007
(51) Int. Cl.: B62M 23/02

(54) **Elektrischer Hilfsantrieb für ein Fahrrad**
Auxiliary electric drive for a bicycle
Dispositf de propulsion électrique auxiliaire pour bicyclette

(30) Priorität: 10.07.2006 DE 102006032016
(43) Veröffentlichungstag der Anmeldung: 16.01.2008
(73) Patentinhaber: Gruber Antrieb GmbH & Co. KEG, 6300 Wörgl (AT)
(72) Erfinder: Gruber, Reinhold, 6080 Igls (AT); Mintscheff, IIian, 6020 Innsbruck (AT); Schweitzer, Karl, 6300 Angerberg (AT); Schweitzer, Monika, 6300 Wörgl (AT)
(74) Vertreter: Bauer, Friedrich

(56) Entgegenhaltungen:
- EP-A1- 0 968 911
- EP-A2- 0 728 663
- DE-U1- 29 817 404
- DE-U1-9202004 014 18
- GB-A- 2 336 575
- GB-A- 2 341 364

## Beschreibung

Die Erfindung betrifft einen elektrischen Hilfsantrieb für ein Fahrradgemäß dem Oberbegriff des Anspruches 1.

Ein elektrischer Hilfsantrieb ist beispielsweise aus der DE 20 2004 014 189 U1 bekannt. Der Motor dieses Hilfsantriebs ist sehr kompakt ausgebildet und zusammen mit dem zugehörigen Getriebe im Sattelrohr des Fahrrads untergebracht, wobei der Motor über ein Kegelradgetriebe direkt auf die Kurbelwelle der Tretkurbel einwirkt und den Fahrer beim Treten unterstützt. Übliche Motoren dieser Art haben beispielsweise etwa 100-200 Watt und werden über beispielsweise am Fahrradsattel befestigte Akkus mit Strom versorgt. Der große Vorteil derartiger Hilfsantriebe ist, dass sie sehr leicht und in praktisch jedes übliche Sattelrohr einbaubar sind, so dass sie das Gesamtgewicht des Fahrrads nur geringfügig erhöhen und optisch nicht sichtbar sind. Weiterhin können handelsübliche Fahrräder mit einem entsprechend großen Sattelrohrinnendurchmesser, insbesondere Mountainbikes, mit derartigen Hilfsantrieben ohne weiteres nachgerüstet werden.

Obwohl in der DE 20 2004 014 189 U1 beschrieben ist, dass ein Fahrrad mit dem dortigen Hilfsantrieb grundsätzlich auch alleine bewegt werden kann, ohne dass der Fahrer mittreten muss, sind derartige Hilfsantriebe dafür gedacht, den Fahrer beim Treten lediglich zu unterstützen und nur einen Teil der Tretarbeit abzunehmen. Der dortige Hilfsantrieb weist hierzu eine Steuerung auf, welche den Motor mit einer Drehzahlregelung betreibt, wobei der Motor im Betrieb auf eine bestimmte Solldrehzahl geregelt wird.

Weiterhin sind Hilfsantriebe bekannt, bei denen die vom Fahrer auf die Pedale aufgebrachte Last mittels eines Belastungsdetektors aufwendig gemessen und proportional dazu die Motorleistung geregelt wird. Mit Steigen der Pedalkraft nimmt dort die Unterstützung durch den Hilfsantrieb zu. Dies hat jedoch den nachteiligen Effekt, dass ein Fahrer, der sich überfordert fühlt und daher nicht mehr eine hohe Tretkraft aufbringen möchte, im Prinzip noch mehr leisten müsste, um vom Motor verstärkt unterstützt zu werden. Ein weiterer Nachteil bei bekannten Hilfsantrieben besteht darin, dass sie unter Sicherheitsaspekten in Gefahrensituationen, beispielsweise beim Bremsen oder bei einem Sturz des Fahrers, nicht optimal sind, da sie das Fahrrad in einem derartigen Fall weiter antreiben.

Aus der DE 298 17 404 U1 ist ein elektrischer Hilfsantrieb gemäß dem Oberbegriff des Anspruchs 1 bekannt. Die elektronische Steuerung des Hilfsantriebs regelt den Motor derart, dass bis zu einer Geschwindigkeit von 20 km/h der Fahrer mit einer bestimmten, relativ hohen Leistung unterstützt wird. Bei einer höheren Geschwindigkeit wird die Motorleistung abgesenkt. Die Motorunterstützung im Bereich zwischen 6 und 20 km/h wird nur dann aufrecht erhalten, wenn die Trittgeschwindigkeit des Fahrers einen vorbestimmten Wert erreicht.

Auch aus der DE 10 2004 022 789 A1 ist ein electrischer Hilfsantrieb für ein Fahrrad bekannt, bei dem eine elektronische Steuerung den Motor in Abhängigkeit von der Trittfrequenz des Fahrers steuert.

Der Erfindung liegt die Aufgabe zugrunde, einen elektrischen Hilfsantrieb für ein Fahrrad der eingangs genannten Art zu schaffen, der eine unter Bedienungs- und Sicherheitsgesichtspunkten besonders vorteilhafte, einfache Motorsteuerung aufweist.

Diese Aufgabe wird erfindungsgemäß durch einen elektrischen Hilfsantrieb mit den Merkmalen des Anspruches 1 gelöst. Vorteilhafte Ausführungsformen der Erfindung sind in den weiteren Ansprüchen beschrieben.

Beim erfindungsgemäßen Hilfsantrieb betreibt die elektronische Steuerung bis zu einer minimalen Trittfrequenzvon 20 bis 40 Pedalumdrehungen pro Minute den Motor mit einem minimalen Drehmoment. Dagegen betreibt die Steuerung den Motor mit einem wesentlich höheren Nenndrehmoment, wenn die Trittfrequenz im Bereich zwischen der minimalen Trittfrequenz und einer höheren Nenntrittfrequenz liegt.

Für den erfindungsgemäßen Hilfsantrieb ist es somit charakteristisch, dass der Motor bis zu einer bestimmten Motordrehzahl (Nenndrehzahl), die einer bestimmten Trittfrequenz des Fahrers, nämlich der Nenntrittfrequenz, entspricht, mit einer Drehmomentregelung betrieben wird, wobei der Motor in einem niedrigen Trittfrequenzbereich von beispielsweise 0 bis 30 Pedalumdrehungen pro Minute mit einem vorzugsweise konstanten, minimalen Drehmoment (Strom bzw. Leistung) betrieben wird, während der Motor bei einer höheren Trittfrequenz, d.h. ab einer bestimmten Minimaltrittfrequenz bis hin zu einer Nenntrittfrequenz, mit einem wesentlich höheren, vorzugsweise konstanten Nenndrehmoment (Nennstrom) betrieben wird. Das minimale Drehmoment ist dabei so bemessen, dass es nicht ausreicht, um das Fahrrad von alleine in Bewegung zu setzen. Das minimale Drehmoment dient lediglich dazu, dass der Motor, der zweckmäßigerweise erst während der Fahrt, d.h. wenn der Fahrer die Pedale in Umdrehung versetzt, zugeschaltet wird, hochfahren kann und eine Drehzahlmessung des Motors ermöglicht wird. Dies bietet eine hohe Sicherheit, da aufgrund des minimalen Drehmoments der Motor nicht in der Lage ist, bei einem versehentlichen Einschalten des Motors das Fahrrad selbständig in Bewegung zu setzen. Weiterhin schaltet der Motor auch automatisch auf das minimale Drehmoment zurück, wenn der Fahrer zu Treten aufhört (da dann die minimale Trittfrequenz unterschritten wird), was beispielsweise beim Bremsvorgang oder bei einem Sturz der Fall ist. Das Zurückschalten des Motors auf das minimale Drehmoment, in dem das Fahrrad nicht mehr in nennenswertem Umfang angetrieben wird, entspricht somit dem Verhalten des Fahrers, wenn er zu Treten aufhört.

Tritt der Fahrer dagegen mit einer gewissen Geschwindigkeit in die Pedale, so dass die aktuelle Trittfrequenz oberhalb der festgelegten minimalen Trittfrequenz liegt, wird der Motor mit dem wesentlich höheren Nenndrehmoment betrieben und der Fahrer entsprechend unterstützt. Die Unterstützung durch den Hilfsantrieb hängt somit nicht von der Kraft ab, mit der der Fahrer in die Pedale tritt, sondern von der Trittfrequenz, d.h. von der Umdrehungsgeschwindigkeit der Kurbelwelle, und ist somit auch unabhängig vom eingelegten Gang, d.h. vom Übersetzungsverhältnis zwischen Kurbelwelle und Hinterrad.

Darüber hinaus ist ein derartiger Hilfsantrieb auf sehr einfache Weise bedienbar, da man lediglich einen Ein- und Ausschalter benötigt der gegebenenfalls auch zur Variierung der gespeicherten Nenntrittfrequenz (Motornenndrehzahl) benutzt werden kann. Die Motorsteuerung kann auf sehr einfache und zuverlässige Weise realisiert werden.

Eine besonders vorteilhafte und einfache Ausführungsform ergibt sich, wenn eine Freilaufeinrichtung vorgesehen ist, die bewirkt, dass die Kraftübertragung zwischen Motor und Kurbelwelle des Pedalantriebs nur in einer Richtung erfolgen kann, und zwar so, dass der Motor bzw. das damit verbundene Getriebe, die Kurbelwelle antreibt, wenn der Motor eine Umdrehungsgeschwindigkeit erreicht hat, die der Umdrehungsgeschwindigkeit der Kurbelwelle entspricht, während in umgekehrter Richtung die Kurbelwelle den Motor nicht mitdreht. Der Motor kann sich somit nur ganz drehen, wenn gleichzeitig die Tretkurbel vom Fahrer in Umdrehung versetzt wird, wogegen der Fahrer auch bei abgeschaltetem Motor die Pedale bewegen kann und in diesem Fall der Motor nicht mitbewegt wird.

Gemäß einer vorteilhaften Ausführungsform schaltet die Steuerung den Motor von einer Leistungsregelung auf eine Drehzahlregelung mit konstanter Regelung um, wenn die Trittfrequenz des Fahrers über der Nenntrittfrequenz liegt. Dies bedeutet mit anderen Worten, dass dann, wenn der Fahrer sehr schnell tritt und seine Trittfrequenz oberhalb der Nenntrittfrequenz liegt, die Stromzufuhr zum Motor auf einen Wert begrenzt wird, der das Weiterlaufen des Motors mit einer bestimmten Drehzahl ermöglicht, die jedoch niedriger ist als diejenige Drehzahl, die zur weiteren Unterstützung des Fahrers erforderlich wäre. In diesem Fall wird somit die Freilaufeinrichtung wieder geöffnet.

Gemäß einer vorteilhaften Ausführungsform beträgt die minimale Trittfrequenz, bis zu der der Motor mit dem minimalen Drehmoment betrieben wird, 20 bis 40, insbesondere 25 bis 35 Pedalumdrehungen pro Minute.

Vorzugsweise beträgt die Nenntrittfrequenz, bis zu der der Motor mit dem Nenndrehmoment betrieben wird, 45 bis 100, insbesondere 50 bis 75 Pedalumdrehungen pro Minute.

Gemäß einer besonders vorteilhaften Ausführungsform ist die Nenntrittfrequenz vom Fahrer durch Betätigen einer Eingabevorrichtung einstellbar. Hierdurch kann die Nenntrittfrequenz, bis zu der der Fahrer vom Motor unterstützt wird, individuell nach den Vorlieben des Fahrers eingestellt werden.

Vorzugsweise umfasst der Hilfsantrieb einen Mikrokontroller, der mit der Eingabevorrichtung elektrisch verbunden ist und mittels der Eingabevorrichtung in einen Lauf-Betriebsmodus oder in einen Erfassungsmodus schaltbar ist, wobei der Mikrokontroller im Lauf-Betriebsmodus eine bereits abgespeicherte Motornenndrehzahl, die einer bestimmten Nenntrittfrequenz entspricht, als Motornenndrehzahl verwendet, bis zu welcher der Motor den Fahrer unterstützt, während der Mikrokontroller im Erfassungsmodus die aktuelle Motordrehzahl erfasst und als neue Motornenndrehzahl übernimmt, falls die aktuelle Motordrehzahl innerhalb eines erlaubten Drehzahlbereiches für die Motornenndrehzahl liegt.

Vorzugsweise besteht die Eingabevorrichtung aus einem Taster, der bei kurzer Betätigung den Mikrokontroller in den Lauf-Betriebsmodus und bei längerer Betätigung in den Erfassungsmodus schaltet. Mittels eines derartigen Tasters ist eine sehr einfache Bedienung des Hilfsantriebs beispielsweise derart möglich, dass zum Ein- bzw. Ausschalten des Hilfsantriebs ein kurzer Tastendruck und zum Einstellen der individuellen Nenntrittfrequenz lediglich ein längerer Tastdruck während der Fahrt genügt.

Gemäß einer vorteilhaften Ausführungsform wird der Motor von der Steuerung ausgeschaltet, wenn die Trittfrequenz des Fahrers länger als eine vorgegebene Zeit unterhalb der minimalen Trittfrequenz liegt. Diese vorgegebene Zeit kann beispielsweise bei 5 bis 30 Sekunden, vorzugsweise bei etwa 10 Sekunden, liegen. Betätigt der Fahrer die Pedale somit während dieser Zeit von beispielsweise 10 Sekunden nur sehr langsam oder überhaupt nicht, schaltet sich der Motor automatisch ab.

Vorzugsweise ist der Motor innerhalb des Sattelrohrs angeordnet und über ein Getriebe mit der Kurbelwelle der Tretkurbel in Wirkverbindung bringbar. In diesem Fall sind Motor und Getriebe von außen nicht sichtbar und innerhalb des Sattelrohrs geschützt angeordnet. Alternativ hierzu ist es jedoch auch denkbar, einen Motor mit der erfindungsgemäßen Steuerung außerhalb des Sattelrohrs anzuordnen und über ein geeignetes Getriebe mit der Kurbelwelle oder einem vorderen Antriebszahnkranz zu kuppeln.

Die Erfindung betrifft weiterhin ein Fahrrad mit einem Hilfsantrieb der vorstehend genannten Art.

Die Erfindung wird nachfolgend anhand der Zeichnungen beispielhaft näher erläutert. Es zeigen:
- Figur 1 :: eine Seitenansicht eines Fahrradrahmens,
- Figur 2 :: die Einzelheit II von Figur 1 in vergrößerter Einzeldarstellung,
- Figur 3 :: eine Schnittdarstellung des Fahrradrahmens im Bereich der Kurbelwelle und des unteren Teils des Sattelrohrs mit eingebautem Hilfsantrieb,
- Figur 4 :: ein Diagramm zur Darstellung der Abhängigkeit des Motordrehmoments von der Drehzahl bzw. Trittfrequenz gemäß einer ersten Ausführungsform, und
- Figur 5 :: ein Diagramm zur Darstellung der Abhängigkeit des Motordrehmoments von der Drehzahl bzw. Trittfrequenz gemäß einer zweiten Ausführungsform der Erfindung.

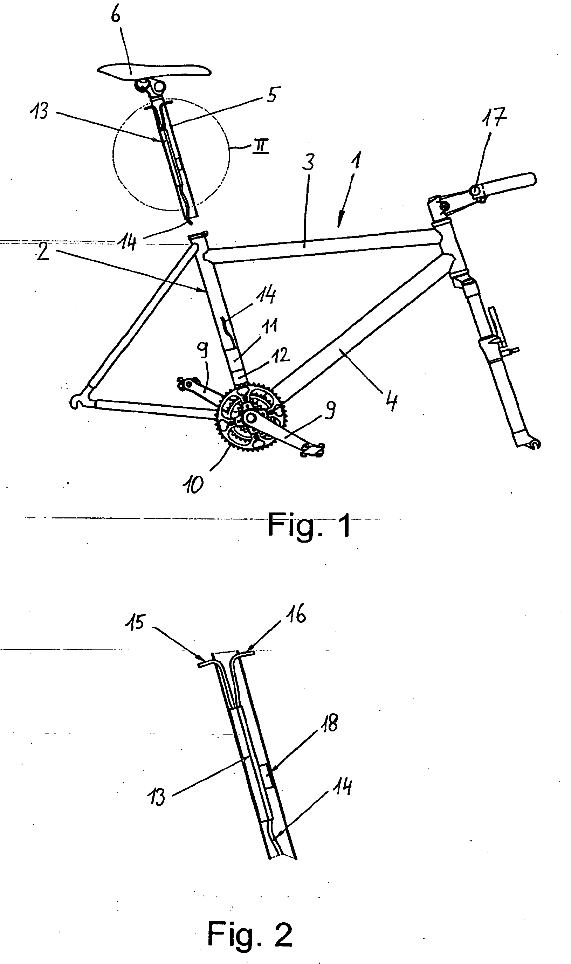

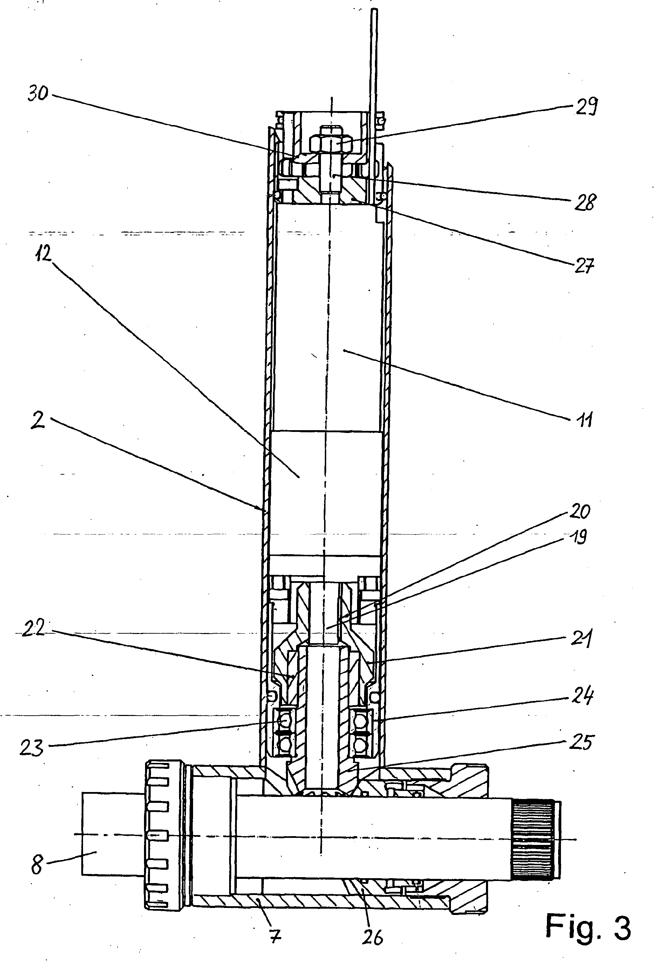

Aus Figur 1 ist ein Fahrradrahmen 1 eines Fahrrads, beispielsweise eines Mountainbikes, ersichtlich, der ein Sattelrohr 2, ein Oberrohr 3 und ein Diagonalrohr 4 aufweist. In das Sattelrohr 2 ist eine Sattelstütze 5 einsteckbar, die einen Sattel 6 trägt. An der Verbindungsstelle zwischen Sattelrohr 2 und Diagonalrohr 4 ist ein quer verlaufendes Kurbelwellenlagerrohr 7 (Figur 3) angeordnet, in dem eine Kurbelwelle 8 drehbar gelagert ist. An den beiden Enden der Kurbelwelle 8 sind in bekannter Weise Pedale 9 befestigt, mit denen vordere Zahnräder 10 in Umdrehung versetzt werden können, um eine über diese laufende, nicht näher dargestellte Fahrradkette und damit das Hinterrad des Fahrrads anzutreiben.

Wie aus den Figuren 1 und 2 ersichtlich, ist innerhalb des Sattelrohrs 2 ein Motor 11 mit einem Getriebe 12 angeordnet, das die Drehzahl des Motors entsprechend untersetzt und über einen später noch näher beschriebenen Freilauf ein im Sattelrohr 2 und Kurbelwellenlagerrohr 7 angeordnetes Kegelradgetriebe in Umdrehung versetzen kann, das auf die Kurbelwelle 8 einwirkt.

Es wird weiterhin in den Figuren 1 und 2 angedeutet, dass der Motor 11 weiterhin über ein Kabel 14 mit einer elektronischen Steuerung 13 (Regler) in elektrischer Verbindung steht, die in der Sattelstütze 5 untergebracht ist. Über ein weiteres Kabel 15 ist die Steuerung 13 mit einem nicht näher dargestellten Akku verbunden, der beispielsweise an der Unterseite des Sattels 6 befestigt werden kann. Die elektronische Steuerung 13 ist somit direkt mit dem Akku verbunden. Es gibt also keinen Hauptschalter, mit dem die Verbindung zwischen Akku und Steuerung 13 unterbrochen bzw. geschlossen werden könnte. Über ein weiteres Kabel 16 ist die Steuerung 13 mit einem nicht näher dargestellten Schalter in Form eines Tasters verbunden, der im Bereich des Fahrradlenkers 17 angeordnet ist und vom Fahrer bequem erreicht werden kann.

Die elektronische Steuerung 13 wird von unten her derart in die Sattelrohrstütze 5 eingebaut, dass eine ausreichende Wärmeübertragung von Kühlkörpern 18 des Leistungsteils der Steuerung 13 zur Sattelrohrstütze 5 erfolgen kann. Dies kann durch die Verwendung von Wärmeleitpasten unterstützt werden.

Im Folgenden wird anhand von Figur 3 der konstruktive Aufbau des elektrischen Hilfsantriebs näher beschrieben.

Das Getriebe 12 ist direkt an den Motor 11 angeflanscht und weist eine über ihre untere Stirnseite vorstehende Antriebswelle 19 auf. Diese Antriebswelle 19 ist über eine Passfeder 20, eine Freilaufhülse 21 und einen Freilauf 22 mit einem Antriebskegelrad 25 kuppelbar, das mittig am unteren Ende des Sattelrohrs 2 drehbar gelagert ist. Die Lagerung erfolgt über Kugellager 23, die in ein hülsenförmiges Freilaufaußengehäuse 24 eingesetzt sind.

Das Antriebskegelrad 25 wirkt mit einem Kegelrad 26 zusammen, das drehfest mit der Kurbelwelle 8 verbunden ist und sich innerhalb des Kurbelwellenlagerrohrs 7 befindet.

Aufgrund dieser Anordnung kann der Motor 11 die Kurbelwelle 8 antreiben und damit den Fahrer beim Treten unterstützen, wenn der Freilauf geschlossen ist und der Fahrer innerhalb eines bestimmten Trittfrequenzbereiches fährt. Umgekehrt bewirkt der Freilauf, dass der Motor, wenn er abgeschaltet ist oder zu langsam läuft, um den Freilauf zu schließen, von der Kurbelwelle 8 nicht mitgedreht wird.

Der Motor 11 wird, wie weiterhin aus Figur 3 ersichtlich, mittels eines an der Oberseite des Motors 11 angeordneten Klemmkegeltopfs 27, der über einen Gewindestift 28 und eine auf diesen aufschraubbare Mutter 29 mit einem Klemmkegel 30 zusammenwirkt, axial im Sattelrohr 2 festgelegt.

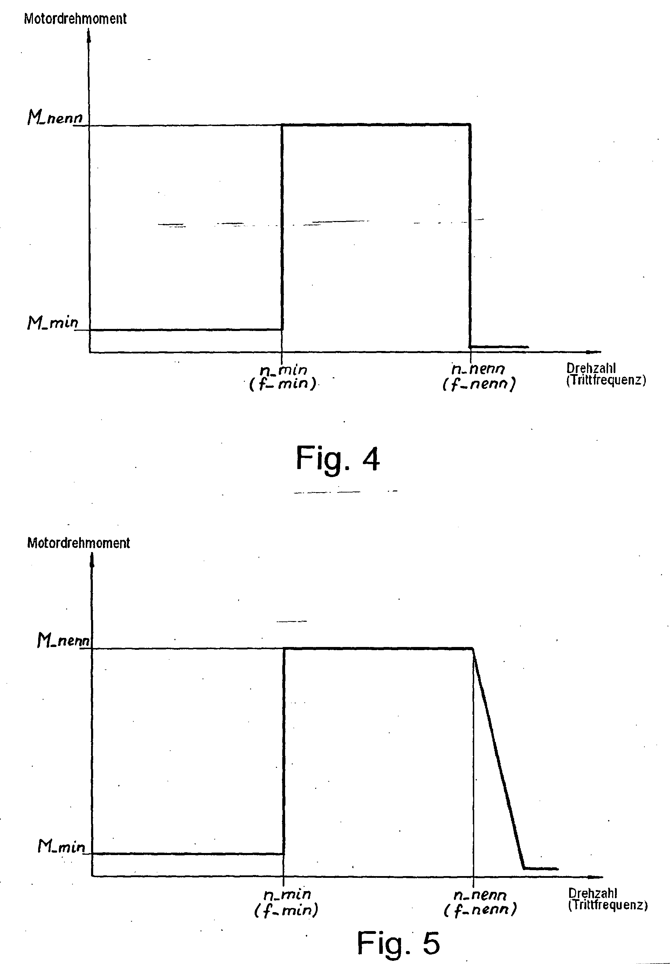

Im folgenden wird anhand von Figur 4 die Regelung des Motors durch die elektronische Steuerung 13 näher beschrieben.

Nach dem Einschalten des Hilfsantriebs wird der Motor 11 mit einem definierten, reduzierten Strom (beispielsweise 400 bis 500 mA) bestromt, d.h. mit einem definierten, reduzierten minimalen Drehmoment M_min betrieben. Dieses minimale Drehmoment M_min ist so gering, dass sich einerseits das Fahrrad hierdurch nicht selbständig in Bewegung setzen kann, beispielsweise bei versehentlichem Drücken des Ein-Tasters, während andererseits eine Messung der Motordrehzahl ermöglicht wird.

Beginnt der Fahrer unmittelbar nach dem Einschalten des Hilfsantriebs zu treten oder schaltet der Fahrer während des Tretens den Hilfsantrieb ein, beschleunigt der Motor 11 seine Drehzahl bis zum Schließen des Freilaufs, d.h. bis die Motordrehzahl die Kurbelwellendrehzahl eingeholt hat. Dies ist der Fall, wenn die Drehzahl der mit der Antriebswelle 19 verbundenen Freilaufhülse 21 (motorseitiges Drehverbindungselement) gleich der Drehzahl des Antriebskegelrades 25 (kurbelwellenseitiges Drehverbindungselement) ist.

Der Motor 11 wird mit dem minimalen Drehmoment M_min solange betrieben, bis die aktuelle Motordrehzahl eine bestimmte minimale Motordrehzahl n_min erreicht, die einer bestimmten minimalen Trittfrequenz f_min entspricht. Beispielsweise kann die minimale Motordrehzahl bei etwa 3.300 Umdrehungen pro Minute liegen, was einer Pedaltrittfrequenz (Kurbelwellendrehzahl) von beispielsweise 30 Umdrehungen pro Minute entsprechen kann.

Tritt der Fahrer schneller als mit der minimalen Trittfrequenz f_min, kann auch der Motor 11 über die Minimaldrehzahl n_min beschleunigen. Überschreitet der Motor die Minimaldrehzahl n_min, wird der Motor mit einem wesentlich höheren Strom von beispielsweise 6 bis 8 A bestromt, so dass er ab der Minimaldrehzahl mit einem konstanten Nenndrehmoment M_nenn betrieben wird, das wesentlich höher als das minimale Drehmoment ist. Der Fahrer erfährt dadurch eine entsprechende Unterstützung beim Treten durch den Hilfsantrieb.

Der Betrieb des Motors 11 mit dem Nenndrehmoment M_nenn findet solange statt, solange der Fahrer nicht schneller tritt als mit einer Nenntrittfrequenz f_nenn, die einer MotornenndrehzahJ. n_nenn entspricht. Die Nenntrittfrequenz f_nenn (bzw. Motornenndrehzahl n_nenn) kann vom Fahrer eingestellt und an die individuellen Bedürfnisse angepasst werden. Beispielsweise kann der Fahrer die Nenntrittfrequenz auf 45 bis 100, insbesondere 50 bis 75 Pedalumdrehungen pro Minute einstellen. Die Einstellung der Nenntrittfrequenz kann beispielsweise dadurch erfolgen, dass der Taster beim Treten für eine vorbestimmte längere Zeit gedrückt gehalten wird, worauf die elektronische Steuerung 13 die aktuelle Trittfrequenz als neue Nenntrittfrequenz (bzw. Motornenndrehzahl) übernimmt.

Die individuelle Einstellbarkeit der Nenntrittfrequenz (Motornenndrehzahl) kann dadurch realisiert werden, dass der Hilfsantrieb einen Mikrokontroller umfasst und mittels des Tasters (Eingabevorrichtung) von einem Lauf-Betriebsmodus in einen Erfassungsmodus umgeschaltet werden kann, wenn der Taster längere Zeit, beispielsweise länger als 1 Sekunde, gedrückt wird. Im Lauf-Betriebsmodus wird eine bereits abgespeicherte Motornenndrehzahl (Nenntrittfrequenz) verwendet, bis zu der der Motor mit dem Nenndrehmoment betrieben wird. Wird der Mikrokontroller dagegen durch längeres Drücken des Tasters auf den Erfassungsmodus umgeschaltet, wird die aktuelle Motordrehzahl (aktuelle Trittfrequenz) erfasst und als neue Nenndrehzahl (Nenntrittfrequenz) abgespeichert. Das Umschalten des Mikrokontrollers in den Erfassungsmodus kann bei abgeschaltetem Motor oder gemäß einer alternativen Ausführungsform bei laufendem Motor erfolgen. Zusätzliche Voraussetzung für die Übernahme der neuen Motornenndrehzahl ist, dass die aktuelle Motordrehzahl innerhalb eines erlaubten Drehzahlbereichs liegt.

Tritt der Fahrer schneller als mit der Nenntrittfrequenz f_nenn, so schaltet die elektronische Steuerung 13 den Motor 11 von Drehmomentregelung auf Drehzahlregelung um, so dass der Motor mit einer konstanten Drehzahl weiter gedreht wird. Der Freilauf öffnet sich, so dass der Motor 11 von der schneller drehenden Kurbelwelle nicht mitgedreht wird. Das Motordrehmoment ist sehr gering und nur so hoch, dass der Motor 11 mit einer bestimmten Drehzahl weitergedreht wird, ohne jedoch den Fahrer weiter zu unterstützen.

Tritt der Fahrer anschließend wieder langsamer mit einer Trittfrequenz, die zwischen der minimalen Trittfrequenz und der Nenntrittfrequenz liegt, regelt die Steuerung 13 den Motor 11 wieder derart, dass er mit dem Nenndrehmoment betrieben wird. Tritt der Fahrer so langsam, dass die Trittfrequenz unterhalb der minimalen Trittfrequenz liegt, wird der Motor wieder mit dem minimalen Drehmoment betrieben. Hält die Unterschreitung der minimalen Trittfrequenz länger als eine vorgegebene Zeit t_abschalt an, die etwa bei beispielsweise 10 Sekunden liegen kann, wird der Motor 11 dauerhaft abgeschaltet. Die Reduzierung des Motors auf das minimale Drehmoment und die Abschaltung des Motors 11 gewährleisten bei mangelnder Tretaktivität des Fahrers, dass das Fahrrad nicht ohne den Willen des Fahrers angetrieben werden kann.

In Figur 5 ist eine zweite Ausführungsform einer Regelungslogik beschrieben, mit welcher die elektronische Steuerung 13 den Motor 11 regeln kann. Diese Regelungslogik unterscheidet sich nur in der Regelung des Motors bei einer Trittfrequenz, die über der Nenntrittfrequenz f_nenn liegt, während die Regelung des Motors unterhalb der Nenntrittfrequenz gleich zu derjenigen von Figur 4 ist.

Übersteigt bei der Regelungslogik von Figur 5 die aktuelle Trittfrequenz die Nenntrittfrequenz f_nenn, so wird der Motor 11 bei dieser Ausführungsform derart bestromt, dass das Motordrehmoment mit steigender Trittfrequenz kontinuierlich abnimmt. In diesem Fall kann der Fahrer durch Dosierung seiner Muskelkraft, d.h. durch seine Tretleistung, die Motorunterstützung auch im Bereich oberhalb der Nenntrittfrequenz regulieren.

Der Vorteil der vorstehend beschriebenen Motorregelungen ist, dass diese auf sehr einfache Weise realisiert werden können und eine sehr einfache Bedienung des Hilfsantriebs ermöglichen. Zum Ein- und Ausschalten sowie zum Übernehmen einer aktuellen Trittfrequenz als Nenntrittfrequenz, bis zu welcher eine Motorunterstützung erfolgen soll, kann auf einfache Weise mittels eines einzigen Bedienungselements, beispielsweise Tasters, erfolgen. Darüber hinaus ist der Hilfsantrieb auch unter Sicherheitsaspekten optimal, da der Motor, wenn der Fahrer nicht mehr oder nicht mehr mit ausreichender Geschwindigkeit tritt, sofort in einen Betriebszustand zurückgeschaltet wird, indem er das Fahrrad nicht mehr merklich antreibt. Darüber hinaus kann ein derartiger Hilfsantrieb mit einem geringen Stromverbrauch betrieben werden.

## Patentansprüche

1. Elektrischer Hilfsantrieb für ein Fahrrad, mit einem Motor (11) und einer elektronischen Steuerung (13) zum Betreiben des Motors (11) mit unterschiedlichen Drehmomenten in Abhängigkeit der Trittfrequenz eines Fahrers, **dadurch gekennzeichnet, dass** die elektronische Steuerung (13) bis zu einer minimalen Trittfrequenz (f_min) von 20 bis 40 Pedalumdrehungen pro Minute den Motor (11) mit einem minimalen Drehmoment (M_min) betreibt und den Motor mit einem wesentlich höheren Nenndrehmoment (M_nenn) betreibt, wenn die Trittfrequenz im Bereich zwischen der minimalen Trittfrequenz (f_min) und einer höheren Nenntrittfrequenz (f_nenn) liegt.

2. Hilfsantrieb nach Anspruch 1, **dadurch gekennzeichnet, dass** die Steuerung (13) den Motor (11) von einer Drehmomentregelung auf eine Drehzahlregelung mit konstanter Drehzahl umschaltet, wenn die Trittfrequenz des Fahrers über der Nenntrittfrequenz (f_nenn) liegt.

3. Hilfsantrieb nach Anspruch 1 oder 2, **dadurch gekennzeichnet, dass** der Hilfsantrieb ein motorseitiges Drehverbindungselement, ein kurbelwellenseitiges Drehverbindungselement und eine dazwischen angeordnete Freilaufeinrichtung aufweist, mittels der der Motor (11) von einer Kurbelwelle (8) entkoppelt ist, wenn die Drehzahl des motorseitigen Drehverbindungselements niedriger ist als die Drehzahl des kurbelwellenseitigen Drehverbindungselements, während eine Wirkverbindung zwischen Motor (11) und Kurbelwelle (8) geschaffen wird, wenn die Drehzahl des motorseitigen Drehverbindungselements diejenige des kurbelwellenseitigen Drehverbindungselements erreicht.

4. Hilfsantrieb nach einem der vorhergehenden Ansprüche, **dadurch gekennzeichnet, dass** die minimale Trittfrequenz (f_min), bis zu der der Motor (11) mit dem minimalen Drehmoment (M_min) betrieben wird, 25 bis 35 Pedalumdrehungen pro Minute beträgt.

5. Hilfsantrieb nach einem der vorhergehenden Ansprüche, **dadurch gekennzeichnet, dass** die Nenntrittfrequenz (f_nenn), bis zu der der Motor (11) mit dem Nenndrehmoment (M_nenn) betrieben wird, 45 bis 100, insbesondere 50 bis 75 Pedalumdrehungen pro Minute beträgt.

6. Hilfsantrieb nach einem der vorhergehenden Ansprüche, **dadurch gekennzeichnet, dass** eine vom Fahrer betätigbare Eingabevorrichtung zur Einstellung der Nenntrittfrequenz (f_nenn) vorgesehen ist.

7. Hilfsantrieb nach Anspruch 6, **dadurch gekennzeichnet, dass** der Hilfsantrieb einen Mikrokontroller umfasst, der mit der Eingabevorrichtung elektrisch verbunden ist und mittels der Eingabevorrichtung in einen Lauf-Betriebsmodus oder in einen Erfassungsmodus schaltbar ist, wobei der Mikrokontroller im Lauf-Betriebsmodus eine bereits abgespeicherte Motornenndrehzahl, die einer bestimmten Nenntrittfrequenz entspricht, als Motornenndrehzahl (M_nenn) verwendet, bis zu welcher der Motor (11) den Fahrer unterstützt, während der Mikrokontroller im Erfassungsmodus die aktuelle Motordrehzahl erfasst und als neue Motornenndrehzahl (M_nenn) übernimmt, falls die aktuelle Motordrehzahl innerhalb eines erlaubten Drehzahlbereiches für die Motornenndrehzahl (M_nenn) liegt.

8. Hilfsantrieb nach Anspruch 6 oder 7, **dadurch gekennzeichnet, dass** die Eingabevorrichtung aus einem Taster besteht, der bei kurzer Betätigung den Mikrokontroller in den Lauf-Betriebsmodus und bei längerer Betätigung den Mikrokontroller in den Erfassungsmodus schaltet.

9. Hilfsantrieb nach einem der vorhergehenden Ansprüche, **dadurch gekennzeichnet, dass** der Motor (11) von der Steuerung (13) ausgeschaltet wird, wenn die Trittfrequenz des Fahrers länger als eine vorgegebene Zeit (t_abschalt) unterhalb der minimalen Trittfrequenz (f_min) liegt.

10. Hilfsantrieb nach Anspruch 1, **dadurch gekennzeichnet, dass** die Steuerung (13) bei einer Trittfrequenz, die oberhalb der Nenntrittfrequenz (f_nenn) liegt, den Motor (11) derart betreibt, dass das Motordrehmoment mit steigender Trittfrequenz kontinuierlich abnimmt.

11. Fahrrad mit einem elektrischen Hilfsantrieb gemäß einem der vorhergehenden Ansprüche.

## Claims

1. Auxiliary electrical drive for a bicycle, with a motor (11) and an electronic control (13) for operating the motor (11) with different torques as a function of the pedal frequency of a rider, **characterized in that** the electronic control (13) operates the motor (11) with a minimum torque (M_min) up to a minimum pedal frequency (f_min) of 20 to 40 pedal revolutions per minute and operates the motor with a substantially higher nominal torque (M_nenn) if the pedal frequency lies in the range between the minimum pedal frequency (f_min) and a higher nominal pedal frequency (f_nenn).

2. Auxiliary drive according to Claim 1, **characterized in that** the control (13) switches over the motor (11) from torque regulation to speed regulation with constant speed of rotation if the pedal frequency of the rider is above the nominal pedal frequency (f_nenn).

3. Auxiliary drive according to Claim 1 or 2, **characterized in that** the auxiliary drive has a rotary connection element on the motor side, a rotary connection element on the crankshaft side and a free-wheeling device arranged in-between, by which the motor (11) is decoupled from a crankshaft (8) if the rotational speed of the rotary connection element on the motor side is less than the rotational speed of the rotary connection element on the crankshaft side, while an active connection between motor (11) and crankshaft (8) is created if the rotational speed of the rotary connection element on the motor side reaches that of the rotary connection element on the crankshaft side.

4. Auxiliary drive according to any one of the preceding claims, **characterized in that** the minimum pedal frequency (f_min), up to which the motor (11) is operated with the minimum torque (M_min), is 25 to 35 pedal revolutions per minute.

5. Auxiliary drive according to any one of the preceding claims, **characterized in that** the nominal pedal frequency (f_nenn), up to which the motor (11) is operated with the nominal torque (M_nenn), is 45 to 100, in particular 50 to 75 pedal revolutions per minute.

6. Auxiliary drive according to any one of the preceding claims, **characterized in that** an input device, which can be operated by the rider, is provided for adjusting the nominal pedal frequency (f_nenn).

7. Auxiliary drive according to Claim 6, **characterized in that** the auxiliary drive comprises a micro controller, which is electrically connected to the input device and, by means of the input device, can be switched to a run-operating mode or to a detection mode, wherein the micro controller in the run-operating mode uses a previously stored nominal speed of the motor, which corresponds to a certain nominal pedal frequency, as the nominal speed of the motor (M_nenn) up to which the motor (11) supports the rider, while the micro controller in the detection mode detects the actual motor speed and adopts it as the new nominal speed of the motor (M_nenn) if the actual motor speed lies within a permitted speed range for the nominal speed of the motor (M_nenn).

8. Auxiliary drive according to Claim 6 or 7, **characterized in that** the input device consists of a sensor which with short manipulation switches the micro controller to the run-operating mode and with longer manipulation switches the micro controller to the detection mode.

9. Auxiliary drive according to any one of the preceding claims, **characterized in that** the motor (11) is switched off by the control (13) if the pedal frequency of the rider lies below the minimum pedal frequency (f_min) for longer than a pre-defined time (t_abschalt).

10. Auxiliary drive according to Claim 1, **characterized in that** the control (13) operates the motor (11) if the pedal frequency lies above the nominal pedal frequency (f_nenn) in such a way that the motor torque continually decreases with rising pedal frequency.

11. Bicycle with an electrical auxiliary drive according to any one of the preceding claims.

## Revendications

1. Entraînement auxiliaire électrique pour une bicyclette, comportant un moteur (11) et une commande électronique (13) pour faire fonctionner le moteur (11) avec différents couples de rotation en fonction de la fréquence de pédalage d'un conducteur, **caractérisé en ce que** la commande électronique (13) fait fonctionner le moteur (14) avec un couple de rotation minimal (M_min) jusqu'à une fréquence de pédalage minimale (f_min) de 20 à 40 tours de pédale par minute, et fait fonctionner le moteur avec un couple nominal (M_nenn) sensiblement plus élevé lorsque la fréquence de pédalage est située dans la plage entre la fréquence de pédalage minimale (f_min) et une fréquence de pédalage nominale (f_nenn) plus élevée.

2. Entraînement auxiliaire selon la revendication 1, **caractérisé en ce que** la commande (13) commute le moteur (11) depuis une régulation de couple vers une régulation de régime avec régime constant lorsque la fréquence de pédalage du conducteur est supérieure à la fréquence de pédalage nominale (f_nenn).

3. Entraînement auxiliaire selon la revendication 1 ou 2, **caractérisé en ce que** l'entraînement auxiliaire présente un élément de liaison de rotation côté moteur, un élément de liaison de rotation côté arbre de pédalier et un dispositif de roue libre agencé entre ceux-ci, au moyen duquel le moteur (11) est découplé d'un arbre de pédalier (8) lorsque le régime de l'élément de liaison de rotation côté moteur est plus faible que le régime de l'élément de liaison de rotation côté arbre de pédalier, tandis qu'une liaison active entre le moteur (11) et le arbre de pédalier (8) est établie lorsque le régime de l'élément de liaison de rotation côté moteur atteint celui de l'élément de liaison de rotation côté arbre de pédalier.

4. Entraînement auxiliaire selon l'une quelconque des revendications précédentes, **caractérisé en ce que** la fréquence de pédalage minimale (f_min) jusqu'à laquelle le moteur (11) fonctionne avec le couple de rotation (M-min) minimal, est de 25 à 35 tours de pédale par minute.

5. Entraînement auxiliaire selon l'une quelconque des revendications précédentes, **caractérisé en ce que** la fréquence de pédalage nominale (f_nenn) jusqu'à laquelle le moteur (11) fonctionne avec le couple nominal (M_nenn) est de 45 à 100 tours de pédales par minute, en particulier de 50 à 75 tours de pédales par minute.

6. Entraînement auxiliaire selon l'une quelconque des revendications précédentes, **caractérisé en ce qu'**il est prévu un dispositif d'entrée actionnable par le conducteur pour régler la fréquence de pédalage nominale (f_nenn).

7. Entraînement auxiliaire selon la revendication 6, **caractérisé en ce que** l'entraînement auxiliaire comprend un microcontrôleur qui est relié électriquement au dispositif d'entrée et qui peut être commuté dans un mode de fonctionnement en roulement ou dans un mode de détection au moyen du dispositif d'entrée, le microcontrôleur utilisant dans le mode de fonctionnement en roulement un régime nominal de moteur déjà mémorisé, qui correspond à une fréquence de pédalage nominale déterminée, à titre de régime nominal de moteur (M_nenn), jusqu'auquel le moteur (11) assiste le conducteur, tandis que dans le mode de détection, le microcontrôleur détecte le régime nominal actuel du moteur et le reprend à titre de nouveau régime nominal de moteur (M_nenn) pour le cas où le régime de moteur actuel est situé à l'intérieur d'une plage de régime permise pour le régime nominal de moteur (M-nenn).

8. Entraînement auxiliaire selon la revendication 6 ou 7, **caractérisé en ce que** le dispositif d'entrée est constitué par une touche qui, lors d'un court actionnement, commute le microcontrôleur dans le mode de fonctionnement en roulement et, en cas d'actionnement plus long, commute le microcontrôleur dans le mode de détection.

9. Entraînement auxiliaire selon l'une quelconque des revendications précédentes, **caractérisé en ce que** le moteur (11) est interrompu par la commande (13) lorsque la fréquence de pédalage du conducteur se trouve en dessous de la fréquence de pédalage minimale (f_min) pendant une période de temps plus longue qu'une période prédéterminée.

10. Entraînement auxiliaire selon la revendication 1, **caractérisé en ce qu'**en cas de fréquence de pédalage, qui est supérieure à la fréquence de pédalage nominale (f_nenn), la commande (13) fait fonctionner le moteur (11) de telle sorte que le couple de rotation du moteur baisse de façon continue avec l'augmentation de la fréquence de pédalage.

11. Bicyclette comportant un entraînement auxiliaire électrique selon l'une quelconque des revendications précédentes
